# EUROPEAN PATENT SPECIFICATION

(11) **EP 0 657 037 B1**
(45) Date of publication and mention of the grant of the patent: **23.01.2002**
(21) Application number: 92917925.7
(22) Date of filing: 06.08.1992
(51) Int. Cl.: G02B 6/26, G02B 6/42, G02B 26/02

(54) **IMPROVED APPARATUS AND METHOD FOR ALIGNING OPTICAL FIBERS**
Verbesserte Vorrichtung und Verfahren zum Ausrichten von optischen Fasern.
APPAREIL ET PROCEDE AMELIORES D'ALIGNEMENT DE FIBRES OPTIQUES

(43) Date of publication of application: 14.06.1995
(73) Proprietor: ASTARTE FIBER NETWORKS, INC., Boulder, CO 80302 (US)
(72) Inventor: LAOR, Herzel, Boulder, CO 80303 (US)
(74) Representative: Browne, Robin Forsythe, Dr.
(86) International application number: US9206560
(87) International publication number: WO9304388

(56) References cited:
- EP-A- 0 085 633
- FR-A- 2 516 727
- GB-A- 2 139 819
- US-A- 4 474 469
- US-A- 4 790 617
- US-A- 4 911 522

## Description

### Field of the Invention

This invention relates generally to optical fiber switching and, more particularly, to an improved apparatus and method for aligning optical fibers to effect signal transmission therebetween.

### Background of the Invention

The advent of high-quality optical fibers spurred development and installation of communication systems using such fibers to carry light-beam signals between remote points. Such "signals" include binary-encoded data, human speech and TV signals encoded for transmission by light beams. Telephone systems commonly employ optical fibers.

A requirement of such communications systems is that any one of a group of optical fibers can be connected to any one of another group of such fibers. Fiber optic switches perform such a function.

In fact, such switches do not physically connect such fibers. Rather, the fibers (or, more accurately, the signal-carrying cores exposed at the fiber ends) are brought to a "signal-transferring" relationship to one other so that a light beam carried by one fiber is "picked up" by the other.

Two factors are of particular importance in a fiber optic switch. One is that alignment of fibers must be performed very rapidly. And this is so irrespective of whether only two or a relatively large number of fibers is involved. Users have little tolerance for delay occasioned by a switch which is slow to react. Another is that alignment must be performed very accurately since signal attenuation (or avoidance of it) is very much a function of alignment accuracy.

One known approach to fiber alignment involves the use of four photodiodes arranged contiguously one to another in a "2x2" arrangement. Such diodes produce an electrical output generally proportional to the amount of light striking the diode. The arrangement uses two or three fibers in side-by-side relationship. One fiber (the center one in a three-fiber configuration) carries the voice or data signal and one or two emit light for alignment. An aligning beam (or beams) of light impinges on the diodes and when the output signal from each diode is generally equal to that of each other diode, the associated signal-carrying fiber is properly aligned.

A disadvantage of this approach is that it seriously affects lens placement and, as a consequence, has an adverse effect on the overall size of the switch.

Other approaches involving fiber alignment (but not in a fiber optic switch) are shown in various United States patents, one of which is U.S. Patent No. 4,677,290 (Mitch). The Mitch patent describes a method for aligning an optical fiber with a single semi-conductor and for fixing (as by soldering) the fiber position, once aligned. The semi-conductor has an electrical characteristic, e.g., voltage, which varies with the intensity of light impinging on it. Light is introduced into the fiber and thence to the semi-conductor and the fiber is moved until the observed electrical characteristic indicates that the desired degree of coupling has been obtained.

The apparatus and method described in U.S. Patent No. 3,938,895 (Bridger et al.) involves introducing light into one optical fiber which is held stationary. A second fiber is moved until the light coupled into it from the first fiber, as measured by a photodetector, is maximized. The second fiber is then known to be axially aligned with the first fiber.

U.S. Patent No. 4,432,599 (McMahon) shows a fiber optic differential sensor used to determine the displacement of the axis of a light-emitting movable fiber from a "home" or neutral position. The stationary sensing fiber bundle may include two, three or four separate fibers, each of which is connected to a detector and comparator circuit. The movable fiber is known to be in its neutral position when the light received by each of the fibers in the bundle is equal to that received by each of the others. Displacement is measured by detecting imbalances in the received light.

The apparatus shown in U.S. Patent No. 4,758,061 (Horn) is used for aligning and then joining the ends of two "light waveguides," e.g., fiber optic cables. One waveguide is held stationary and the other is movable in three axes of motion. Light is injected into the stationary waveguide and the movable waveguide is positioned in the "x" and/or "y" directions until the magnitude of injected light received by it is maximized. The waveguides are then known to be in axial alignment. After being so aligned, the movable waveguide is brought toward the stationary waveguide (in the "z" direction) until the ends of the waveguides abut.

The apparatus shown in U.S. Patent No. 4, 792,206 (skuratovsky) is similar in operation to that shown in the Bridger et al. patent. That is, light is coupled into a fibre optic cable which is held stationary. The end of a movable cable receives light from the stationary cable and is known to be aligned with the stationary cable when the amount of coupled light is at a maximum. Cable movement is by a dual cantilever piezoelectric beam.

FR 2516727 discloses a device for aligning fibre optic cables comprising first and second optically opposed fibres disposed on first and second fibre supports respectively. Each fibre support further includes a generating fibre for operating an alignment signal and a pair of receiving fibres for receiving an alignment signal. The device further comprises a control mechanism for performing a comparison of the radiation received by each receiving fibre and adjusting the relative positions of the fibre supports until the first and second fibres are aligned.

### Objects of the Invention

It is an object of the invention to overcome some of the problems and shortcomings of the prior art.

Another object of the invention is to provide an improved apparatus and method for aligning optical fibres in a fibre optic switch.

Still another object of the invention is to provide an improved apparatus and method for aligning optical fibres in a fibre optic switch of reduced physical size.

Another object of the invention is to provide an improved apparatus and method for aligning optical fibres which are movable with respect to one another. How these and other objects are accomplished will become more apparent from the following description of the invention. taken in conjunction with the drawing.

### Summary of the Invention

The unique features of the invention will be best appreciated by first understanding a few basic principles of fiber optic switches since the invention has great utility in such switches. Fiber optic switches use optical fibers instead of wires (like telephone wires) to carry signals. Such signals are not electrical voltages and currents but, rather, are "encoded" optical beams used for communication. The term "communication" means to transfer such signals (usually of the video, voice or data type) from one place to another.

A typical fiber optic switch uses two groups of optical fibers to carry and switch many different signals. A fiber from a group is "connected" to a fiber of the other group by aligning the ends of the fibers (and specifically, the signal-carrying fiber cores) so that optical beams can pass between the fibers. As used herein, "align" and like terms means to position physically or optically by, e.g., using one or more lens. And expressions such as "aligned fibers" is to be understood to mean alignment of the signal-carrying cores of such fibers.

Fiber optic switches are often referred to by nomenclature which identifies the number of fibers in each group. For example, a "2x2" switch has two fibers in each group. And by performing switching functions, any one of the fibers in each group can be "connected to" (aligned with) any one of the fibers in the other group.

Precise alignment of fiber ends is difficult but critical for efficient transfer of an optical beam signal from the end of one fiber (the "transmitting fiber" for purposes of this explanation) to the end of the receiving fiber. And of course, either fiber of an aligned pair may function as a transmitting fiber or a receiving fiber. That is, a signal can pass in either direction through the aligned fibers.

It is apparent from the foregoing that proper operation of the alignment apparatus used in a fiber optic switch is very important. The invention is used in an optical fiber alignment apparatus of the type having first and second optically-opposed fibers. As used herein, "optically-opposed" means positioned to generally face one another, either directly or by use of reflective mirrors. As used with respect to fibers, such term means that the ends of the fibers generally face one another.

The alignment apparatus also has means associated with one of the fibers for generating an alignment signal and means associated with the other fiber for alignment-sensitive detection of such signal. Means responsive to such detection adjusts the relative positions of the fibers to align them for signal transfer.

In the inventive improvement, the means for generating the alignment signal comprises an array of radiation-emitting devices (REDs). Such devices, which are mounted in a spaced relationship to one another, may be embodied as conventional light-emitting diodes, infrared-emitting diodes, laser diodes or other types of devices emitting detectable radiation.

In understanding the invention, it will be helpful to first appreciate that each of the two fibers to be aligned has a beam-shaping lens (preferably a collimating lens) and an array of REDs adjacent to and associated with it. The lens shapes the optical beam and for a particular fiber, its lens and the center of its RED array are arranged in known positions with respect to one another. It will also be helpful to understand that each fiber "lines up" (in ways described below) on the RED array associated with the other fiber so that each fiber is aligned with its "target," the lens associated with the other fiber. Depending upon the embodiment of the invention, the array center may be in registry with the target or it may be offset from it.

The apparatus also includes radiation-responsive means having a radiation guide, a detector and a microprocessor-based, closed loop ("feedback type") servo control for each fiber. Radiation from each RED in an array enters the radiation guide, the intensity of radiation from each RED is detected., i.e., measured, and a signal representing such intensity is generated. The fiber position -- and therefore the direction of an emitted optical beam -- is adjusted by the control until radiation received from each RED is substantially equal to that received from each other RED. The fiber and the beam are thereby aligned with the target.

It is preferred that the intensity of radiation from each RED be separately detected. One way to do so is to pulse each RED in an array in sequence and such "pulsing" may be steady state or at some common (or even different) modulation frequency. Another way to do so is to pulse those REDs in an array substantially simultaneously but at a different modulation frequency. Yet another way is to continuously drive such REDs at a different modulation frequency.

It is noted above that the center of an RED array may be in registry with the target or it may be offset from the target. Whether in registry or offset depends upon the arrangement of the radiation guide as explained below.

In one arrangement, the radiation guide is concentric with and a part of the signal-carrying fiber. In one preferred embodiment, the fiber has a core and a relatively thin cladding covered by a fiber-protecting plastic coating. The radiation guide, which has a wall thickness greater than that of the cladding, is between the core and the cladding. The guide has a refractive index between that of the core and that of the cladding. In another preferred embodiment, the fiber has a core and a cladding, the latter covered by a plastic coating having a refractive index lower than that of the cladding. RED-emitted radiation is retained in the cladding which functions as a radiation guide. For either embodiment of this arrangement, the array center is in registry with the target.

In another arrangement, the apparatus includes a separate aligning fiber mounted to move with the signal-carrying fiber. A convenient arrangement is to mount the aligning fiber and the signal-carrying fiber side-by-side in a common holder. In such arrangement, the radiation guide is part of the aligning fiber. More specifically, the aligning fiber has a core which functions as a radiation guide, a cladding and a protective plastic coating having a refractive index lower than that of the cladding. In such arrangement, the array center is offset from the target. Further details of the manner in which each arrangement and the various embodiments are used to provide and extract RED-emitted radiation are set forth in the detailed description.

An improved method for aligning an optical fiber core with a target includes the steps of pulsing an array of REDs by applying an electrical potential to each RED. Radiation emitted by the REDs is received in a radiation guide and, as necessary, the position of the core and the radiation guide are adjusted. Position adjustment is until radiation received from each RED is substantially equal to that received from each other RED. The core is thereby aligned with the target. The REDs may be pulsed sequentially or simultaneously. In the latter instance, it is preferred to pulse each RED with a different modulation frequency so that the received radiation can be identified to a particular RED.

A characteristic of REDs is that their performance tends to degrade over time. That is, for a given value of driving voltage or current, the intensity of the emitted radiation diminishes. And such REDs do not necessarily degrade at the same rate one to another. Therefore, a highly preferred apparatus includes calibration means for periodically measuring and, if necessary, adjusting the radiation output of each RED. Adjustment (of the driving voltage or current) is so that the output of each RED is substantially equal to that of each other RED in a particular array. In a fiber optic switch, one approach is to periodically suspend switch operation for RED calibration. With microprocessor-based equipment, the time required for calibration is very short and suspended operation and calibration can be automatically performed every 6-12 months, for example.

For simplicity and ease of understanding some of the features of the invention, the foregoing description involves only a pair of optically-opposed signal-carrying fibers, one in each "group." An explanation of other features, including how the REDs are arranged on apertured panels, is set forth below.

In a practical fiber optic switch, there are several (perhaps 10-15 or more) signal-carrying fibers in each group. The following description is based upon such a switch and may seem complex in the absence of related references to the drawing. A careful reading of the detailed description will result in a full understanding of the invention.

A highly preferred embodiment of the invention includes a pair of generally-flat panels in optically-opposed relationship. Each panel has a front surface "facing" toward the other panel and a back surface. Each panel includes a matrix of apertures, preferably round in shape, arranged in rows and columns and spaced equidistant from one another. Each panel also includes a matrix of REDs formed of plural RED arrays. The REDs forming the matrix are likewise in columns and rows. Those REDS (preferably four in number) forming a particular array are regularly spaced around an aperture, e.g., at 900 from one another. The aperture matrix and the RED matrix each have a matrix "center." In rectangular matrices, the matrix center will be at the intersection of the two lines drawn between diagonally-opposite corners of the matrix.

A group of optical fibers is positioned behind each panel adjacent to its back surface. Each fiber is mounted to nominally "point through" a particular aperture toward the other panel. In the arrangement where the radiation guide is the cladding or is between the core and the cladding of the signal-carrying optical fiber, the aperture matrix and the RED matrix are in general registry with one another. This is so since the radiation guide is concentric with the signal-carrying fiber core. In the arrangement having a separate aligning fiber, the matrix centers are offset from one another since the radiation guide is offset from the signal-carrying fiber core.

When performing a switching function, the apparatus controller is "instructed" to "connect" (by fiber alignment) a fiber in one group with a fiber in the other. Positioning movement of each fiber is by the servo control and a "motor" such as a two-axis piezoelectric bender. Coarse, initial movement of each of the two fibers is by applying predetermined voltages to the benders so each fiber is approximately aligned with the other. In so doing, the radiation guide for a particular fiber (positioned behind a panel) is also approximately aligned with (or is at least closer to being aligned with) a particular RED array mounted on the opposed panel. However, such coarse initial movement rarely results in optimally-aligned fibers. In fact, a fiber and its radiation guide may be well out of alignment, perhaps by the width of an aperture or an RED array. Therefore, it is preferred that the apparatus include provisions for identifying the actual position of a fiber and its radiation guide anywhere on the array matrix so that the fiber can be brought to precise alignment with the other.

In a highly preferred approach, the REDS in each row are pulsed simultaneously, the REDs in each column are pulsed simultaneously and, in either order, rows of REDs are pulsed sequentially and columns of REDs are pulsed sequentially. Since the "protocol" for RED and row and column pulsing is predetermined and coordinated with detectors, the positions of all fibers can be quickly determined and corrective action taken by the controller. This approach helps provide a very fast-acting switch.

In another approach, the REDs in the matrix are pulsed sequentially. Since the sequence is predetermined and since the application of an electrical pulse to an RED is coordinated with the detectors, detection of radiation in a radiation guide indicates fiber position. Corrective adjustment follows. However, sequential pulsing of individual REDs is more time-consuming and tends to delay switch operation.

Further aspects of the invention are set forth in the following detailed description.

### Description of the Drawing

FIGURE 1 is a simplified representative perspective view, greatly enlarged and with parts shown in dashed outline and other parts broken away, of one embodiment of the improved apparatus shown in conjunction with a pair of optical fibers to be aligned.

FIGURE 2 is a simplified top plan view, with parts shown in dashed outline, of the apparatus of FIGURE 1 taken along the viewing axis VA2 thereof.

FIGURE 3 is a simplified representative perspective view, greatly enlarged and with parts shown in dashed outline and other parts broken away, of another embodiment of the improved apparatus shown in conjunction with a pair of optical fibers to be aligned.

FIGURE 4 is a simplified top plan view, with parts shown in dashed outline, of the apparatus of FIGURE 3 taken along the viewing axis VA4 thereof.

FIGURE 5A is a depiction, greatly enlarged, of one embodiment of a fiber shown in a projected "overlap" relationship with an array of REDs. Such depiction relates to the apparatus of FIGURE 1.

FIGURE 5B is a depiction, greatly enlarged, of another embodiment of a fiber shown in a projected "overlap" relationship with an array of REDs. Such depiction also relates to the apparatus of FIGURE 1.

FIGURE 6 is a depiction, greatly enlarged, of yet another embodiment of a fiber shown in a projected "overlap" relationship with an array of REDs. Such depiction relates to the apparatus of FIGURE 3.

FIGURE 7 is a front elevation view of a panel used with that embodiment of the apparatus shown in FIGURES 1A and 2.

FIGURE 8 is a front elevation view of another panel used with that embodiment of the apparatus shown in FIGURES 3 and 4.

FIGURE 9 is a simplified side elevation view of a portion of a fiber optic switch which uses one type of folded optical path.

### Detailed Description of Preferred Embodiments

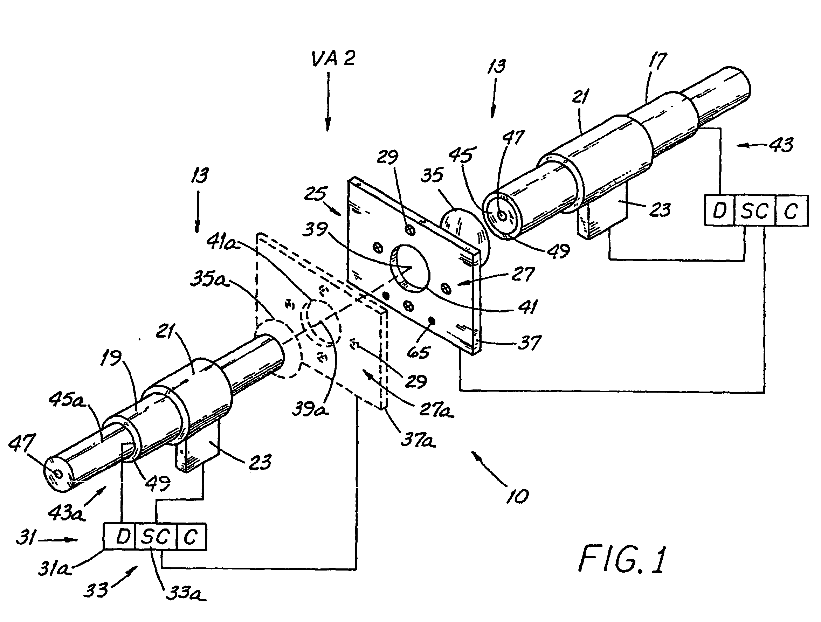

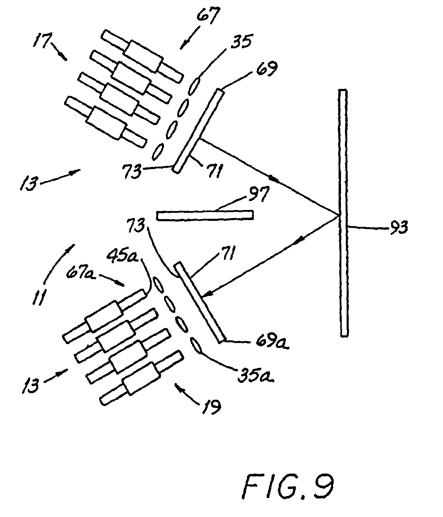

Referring to FIGURES 1 and 9 (and especially to FIGURE 1), the invention will be described first in connection with a simplified arrangement: which, when considered alone, is not suitable as a fiber optic switch. However, an understanding of such simplified arrangement will greatly aid understanding of a multi-fiber switch 11 using the invention. Considering FIGURES 1, 3, and 9, it will also be helpful to appreciate that a fiber optic switch 11 may be considered to have two portions or subsets 13 arranged in a mirror-image relationship. These subsets 13 cooperate with one another in the manner described below to effect switching.

In general, the optical fiber apparatus 10 of FIGURE 1 includes first and second optically-opposed fibers 17 and 19, respectively. Each fiber 17, 19 is mounted in a holder 21 connected to a positioning "motor" such as a piezoelectric bender 23. When appropriate voltages are applied to the bender 23, it positions a fiber 17, 19 in either or both of two axes of movement, i.e., left/right and up/down as viewed in FIGURE 1.

Means 25 associated with one of the fibers, fiber 17 for example, comprises an array 27 of radiation-emitting devices 29 (REDs) for generating an alignment signal. The alignment signal from the REDs 29 is received in and propagates through a portion of the other fiber 19. Means 31 associated with the fiber 19 includes a detector 31a for alignment-sensitive detection of such signal. Means 33 responsive to such detection, such as a microprocessor-based servo controller 33a, adjusts the position of the fiber 19 to align it for signal transfer. Such REDs 29, which are mounted in a spaced relationship to one another, may be conventional light-emitting diodes, infrared-emitting diodes, laser diodes or another type of device emitting detectable radiation. Although the foregoing paragraph describes alignment of only fiber 19, it should be understood that both fibers 17, 19 are simultaneously positioned for alignment with one another.

Each of the two fibers 17, 19 to be aligned has a beam-shaping lens 35, 35a, respectively, (preferably a collimating lens) and an array 27, 27a, respectively, of REDs 29 adjacent to and associated with it. The lens 35, 35a, positioned between a fiber 17, 19 and a panel 37, 37a, shapes the optical beam and facilitates beam alignment with a "target" i.e., the lens 35a, 35 associated with the other fiber 19, 17. For a particular fiber 17, 19, its lens 35, 35a and the center 39, 39a of its RED array 27a, 27 are arranged in known positions with respect to one another. Each fiber 17, 19 "lines up" (in ways described below) on the RED array 27a, 27 associated with the other fiber 19, 17 so that each fiber 17, 19 is aligned with its target. When both fibers 17,19 are in alignment, the communication signal propagating in the core 47 of one of them emerges from the core 47 at the fiber end 57, travels through air and two lens 35, 35a and enters the core 47 of the other fiber. Depending upon the embodiment of the invention, the array center 39, 39a may be in registry with the target lens 35, 35a or it may be offset from it.

To give an idea of scale, each lens 35, 35a and the aperture 41, 41a in each panel 37, 37a is about 6 millimeters in diameter while each fiber 17, 19 is about 125 microns in diameter. That is, the diameter of a fiber 17, 19 is very much less than the diameter of a lens 35, 35a or aperture 41, 41a.

The apparatus 10 also includes radiation-responsive means 43, 43a each having a radiation guide 45 as well as the detector 31a and the microprocessor-based, closed loop ("feedback type") servo control 33a for each fiber 17, 19. Radiation from each RED 29 in an array 27, 27a enters the radiation guide 45, 45a, the intensity of radiation from each RED is detected, i.e., measured, and a signal representing such intensity is generated. The fiber position -- and therefore the direction of an emitted optical beam -- is adjusted by the control 33a until radiation received from each RED 29 is substantially equal to that received from each other RED 29. The fiber 17, 19 and the beam are thereby aligned with the target 35, 35a.

It is preferred that the intensity of radiation from each RED 29 be separately detected. One way to do so is to pulse each RED 29 in an array 27, 27a in sequence and such "pulsing" may be steady state or at some common (or even different) modulation frequency. Another way to do so is to pulse those REDs 29 in an array 27, 27a substantially simultaneously but at a different modulation frequency. Yet another way is to continuously drive such REDs 29 at a different modulation frequency.

It is noted above that the center of an RED array 27, 27a may be in registry with the target 35, 35a or it may be offset from the target 35, 35a. Whether in registry or offset depends upon the arrangement of the radiation guide 45, 45a as explained below.

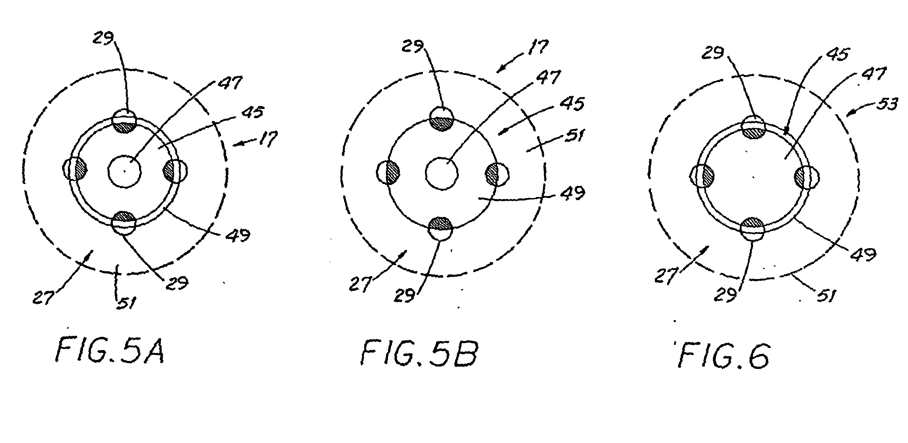

In the arrangement shown in FIGURES 1 and 5A, the radiation guide 45 is concentric with and a part of the signal-carrying fiber 17. The fiber 17 has a core 47 and a cladding 49 and the radiation guide 45 is between the core 47 and the cladding 49. The fiber 17 is covered by a protective plastic coating 51. The guide 45 has a refractive index between that of the core 47 and that of the cladding 49. As exemplary dimensions, the core 47 has a diameter of about 62.5 microns, the guide 45 has an outside diameter of about 115 microns, the cladding 49 has an outside diameter of about 125 microns and the coating 51 has an outside diameter of about 250 microns. The fiber 17 of FIGURE 5A may be used in the arrangement of FIGURE 1.

FIGURE 5B shows another type of fiber 17 having a core 47, a concentric cladding 49 (of about 125 microns in diameter) and a protective plastic coating 51 having a refractive index lower than that of the cladding 49. RED-emitted radiation is retained in the cladding 49 which functions as a radiation guide 45. The fiber 17 of FIGURE 5B may alternatively be used in the apparatus of FIGURE 1.

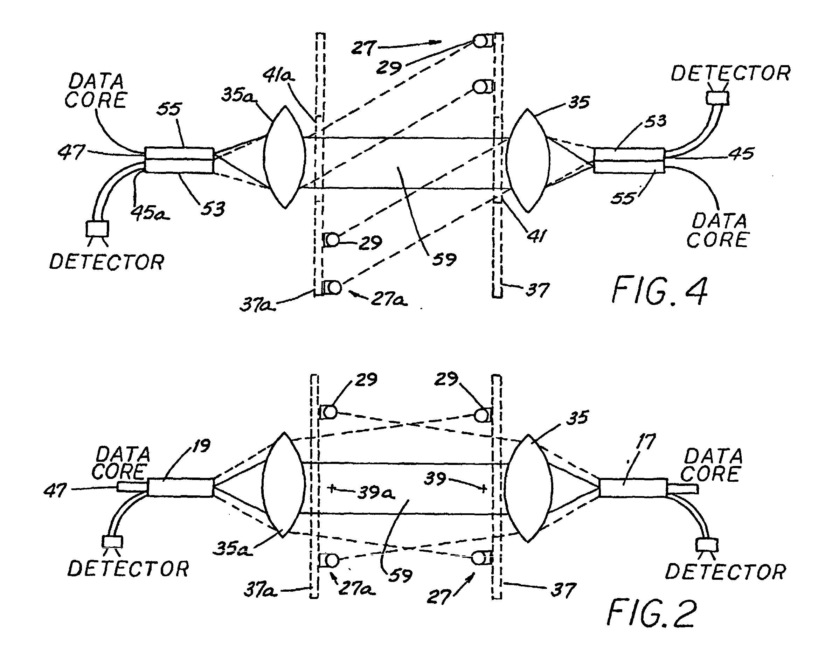

Referring additionally to FIGURE 2, for either embodiment of this arrangement, the array center 39, 39a is in registry with the target lens 35, 35a since the radiation guides 45, 45a are concentric with the cores 47 of their respective fibers 17 and 19. Radiation from each RED 29 in the array 27 passes through the aperture 41a and the lens 35a and enters the radiation guide 45a of the fiber 19. Similarly, radiation from the REDS 29 in the array 27a passes through the aperture 41 and. the lens 35 and enters the radiation guide 45 of the fiber 17.

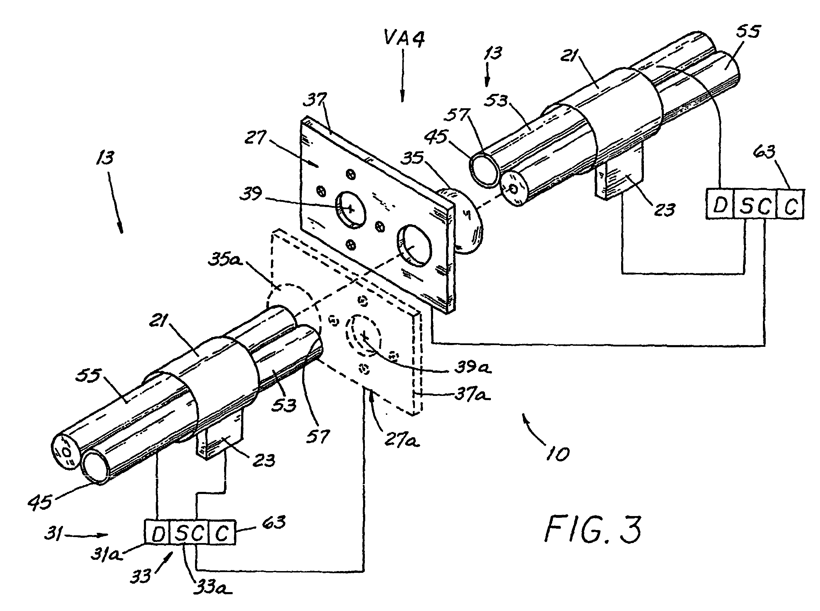

In another arrangement shown in FIGURE 3, the apparatus 10 includes a separate aligning fiber 53 mounted to move with the signal-carrying fiber 55. A convenient arrangement is to mount the aligning fiber 53 and the signal-carrying fiber 55 side-by-side in a common holder 21 which, like that of FIGURE 1, is moved in two axes by a bender 23. In such arrangement, the radiation guide 45 is part of the aligning fiber 53 and the array center 39 is offset from the target lens 35, 35a. More specifically and referring additionally to FIGURE 6, the aligning fiber 53 has a core 47 which is used as a radiation guide. The core 47 is surrounded by a concentric cladding 49 which, in turn, is surrounded by a protective plastic coating 51. As exemplary dimensions, the diameters of the core 47, the cladding 49 and the coating 51 are about 115, 125 and 250 microns, respectively.

Referring additionally to FIGURE 4, radiation from the REDS 29 in the array 27 passes through the aperture 41a and the lens 35a and enters the radiation guide 45a of the fiber 53. Similarly, radiation from the REDs 29 in the array 27a passes through the aperture 41 and the lens 35 and enters the radiation guide 45 of the fiber 53. Merely to give an idea of scale, each signal-carrying optical beam 59 shown in FIGURES 2 and 4 is about 5 millimeters in diameter between the lens 35, 35a and focuses to a spot about 50-60 microns in diameter where it impinges on a fiber core 47. Lens 35, 35a have a focal length of about 10 mm. and the panels 37, 37a are about 900 mm. apart, either measured along a straight line or, preferably, measured along a folded optical path 91 as described below.

Referring to FIGURES 5A, 5B and 6, optimum switch performance results when the guides 45 receive ample radiation from the REDS 29. Such radiation provides a strong "signal" for detection by the detector 31a. Accordingly, each annular radiation guide 45, 45a should, when projected to the REDs 29 in an array 27, overlap about one-half of the area of the image of such REDs 29. This principle is shown in FIGURES 5A and 5B for the arrangement of FIGURES 1 and 2 and in FIGURE 6 for the arrangement of FIGURES 3 and 4.

FIGURES 2 and 4 are marked to identify the data core 47. It should be appreciated that such core 47 may carry data, voice, video or other types of optical signals and is not limited to data alone.

From the foregoing, it will be seen that an improved method for aligning an optical fiber core 47 with a target lens 35, 35a includes the steps of pulsing an array 27 of REDs 29 by applying an electrical potential to each RED 29. Radiation emitted by the REDs 29 is received in a radiation guide 45, 45a and, as necessary, the position of the core 47 and the radiation guide 45, 45a are adjusted. Position adjustment is until radiation received from each RED 29 is substantially equal to that received from each other RED 29 in an array 27, 27a. The core 47 is thereby aligned with the target 35, 35a. The REDs 29 may be pulsed sequentially or simultaneously as described above. In the latter instance, it is preferred to pulse (or continuously drive) each RED 29 with a different modulation frequency so that the received radiation can be identified to a particular RED 29.

For easier understanding, the above description is with respect to one core and one array of REDs. It should be appreciated that, in practice, two cores are simultaneously aligned with their targets so that the communication signal propagates from fiber to fiber as described above.

A characteristic of REDs 29 is that their performance tends to degrade over time. That is, for a given value of driving voltage or current, the intensity of the emitted radiation diminishes. And such REDs 29 do not necessarily provide the same intensity when new nor do they degrade at the same rate one to another. Therefore, a highly preferred apparatus 10 includes calibration means 63 for periodically measuring and, if necessary, adjusting the radiation output of each RED 29. Adjustment (of the driving voltage or current) is so that the output of each RED 29 is substantially equal to that of each other RED 29 in a particular array 27, 27a.

In a fiber optic switch 11, one approach is to periodically suspend switch operation for RED calibration. With microprocessor-based equipment, the time required for calibration is very short and suspended operation and calibration can be automatically performed every 6-12 months, for example. When calibrating, each RED 29 on a panel 37, 37a is pulsed in sequence and its output measured by sensor REDs 65 on the companion panel 37a, 37. The sensor REDs 65 are used only for calibration, not for fiber alignment.

For simplicity and ease of understanding some of the features of the invention, the foregoing description involves only a pair of optically-opposed signal-carrying fibers 17, 19, one in each "group." An explanation of other features, including how the REDs 29 are arranged on apertured panels, is set forth below.

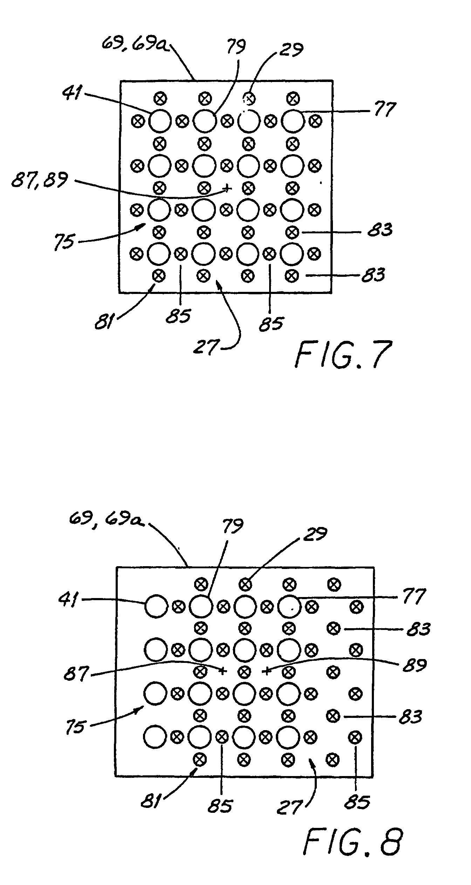

Referring now to FIGURES 7-9, a practical fiber optic switch 11 has several (perhaps 10-15 or more) signal-carrying fibers 17, 19 in each group 67, 67a. When considering the following explanation, it should be recognized that any fiber 17 in group 67 can be "connected" to any fiber 19 in group 67a. That is, fiber interconnection is not limited to a single pair of fibers, one in each group. For example, in a switch 11 having sixteen fibers in each group, there are well in excess of 200 different connection possibilities.

The switch 11 includes a pair of generally-flat panels 69, 69a in optically-opposed relationship. The panels 69, 69a shown in FIGURES 7-9 (and particularly in FIGURES 7 and 8) are generally analogous to the panels 37, 37a and shown in FIGURES 1 and 3. Each panel 69, 69a has a front surface 71 "facing" toward the other panel 69, 69a and a back surface 73. Each panel 69, 69a includes a matrix 75 of apertures 41. Such apertures 41 are preferably round in shape, arranged in rows 77 and columns 79 and spaced equidistant from one another. Each panel 69, 69a also includes a matrix 81 of REDs 29 formed of plural RED arrays 27. The REDs 29 forming the matrix 81 are likewise in rows 83 and in columns 85. When considering FIGURES 7 and 8, it should be understood that in a highly preferred embodiment, any particular RED is part of a row 83 or part of a column 85 but not both. However, arrangements in which a particular RED is part of both a row and a column are possible.

The aperture matrix 75 and the RED matrix 81 each have a matrix "center" 87, 89, respectively. In rectangular matrices, the matrix center will be at the intersection of two lines drawn between diagonally-opposite corners of the matrix.

It is to be noted that in the panel 69, 69a of FIGURE 7, the-matrix centers 87, 89 are in general registry with one another. Such panel 69, 69a is used with the arrangement shown in FIGURES 1 and 2. On the other hand, the matrix centers 87, 89 are offset from one another in the panel 69, 69a of FIGURE 8. Such panel 69, 69a is used with the arrangement shown in FIGURES 3 and 4. Each panel 69, 69a is configured in a "4x4" matrix.

Those REDs 29 (preferably four in number) forming a particular array 27 are regularly spaced around an aperture 41, e.g., at 900 from one another. To analogize RED location to the face of a clock, one RED 29 would be located at 12, 3, 6 and 9 o'clock with respect to an aperture 41. The REDs 29 in an array 27 are also mounted equidistant from the center of the aperture 41 with which they are associated. The arrangement of the apertures 41 and REDs 29 is cooperatively selected so that the RED 29 at 3 o'clock for a particular aperture 41 is the RED 29 at 9 o'clock for that aperture 41 immediately adjacent to the right. Similarly, the RED 29 at 6 o'clock for a particular aperture 41 is the RED 29 at 12 o'clock for that aperture 41 immediately adjacent below.
Referring further to FIGURE 9, the general construction of a preferred optical switch 11 will now be described and followed by further detailed description of the invention. In the illustrated switch 11, a group 67, 67a of optical fibers 17, 19 is positioned behind each panel 69, 69a adjacent to its back surface 73. Lens 35, 35a are mounted between the fibers 17, 19 and the panels 69, 69a. The switch 11 uses what is known as a "folded optical path" 91 which helps reduce its overall physical size.

In the illustrated switch 11, an optical beam from a fiber 17 in, say, the group 67 is directed to a frontal mirror 93. The optical beam is reflected from such mirror 93 to a fiber 19 in the group 67a. Radiation from REDs 29 on surface 71 is similarly reflected to a radiation guide 45a in the group 67a. A light baffle 97 is used to prevent "short circuiting" of light travelling between panels 69, 69a. Such baffle 97 is especially important when calibrating or "normalizing" the output of the REDs 29. There are other types of folded optical paths and the described arrangement of a switch 11 with a folded optical path 91 is generally known.

When performing a switching function, the apparatus controller 33a is "instructed" to "connect" (by fiber alignment) a fiber 17 in one group 67 with a fiber 19 in the other group 67a. Positioning movement of each fiber 17, 19 is by the servo control 33a and a "motor" such as a two-axis piezoelectric bender 23. Coarse, initial movement of each of the two fibers 17, 19 is by applying predetermined voltages to the benders 23 so each fiber 17, 19 is approximately aligned with the other. In so doing, the radiation guide 45, 45a for a particular fiber 17, 19 (positioned behind a panel 69, 69a) is also approximately aligned with (or is at least closer to being aligned with) a particular RED array 27, 27a mounted on the opposed panel 69, 69a. However, such coarse initial movement rarely results in optimally-aligned fibers. In fact, a fiber 17, 19 and its radiation guide 45, 45a may be well out of alignment, perhaps by the width of an aperture 41 or an RED array 27. Therefore, it is preferred that the apparatus include provisions for identifying the actual position of a fiber 17, 19 and its radiation guide 45, 45a anywhere on the RED matrix 81 so that the fiber 17, 19 can be brought to precise alignment with the other.

In a highly preferred approach, the REDs 29 in each row 83 are pulsed simultaneously, the REDs 29 in each column 85 are pulsed simultaneously and, in either order, rows 83 of REDs 29 are pulsed sequentially and columns 85 of REDs 29 are pulsed sequentially. Pulsing rows 83 of REDs 29 provides information as to the vertical location of a fiber 17 while pulsing columns 85 of REDs 29 provides information as to the horizontal location of a fiber 17.

Since the "protocol" for RED and row and column pulsing is predetermined in the controller 33a and coordinated with detectors 31a, the positions of all fibers 17, 19 can be quickly determined and corrective action taken by the controller 33a as needed. This approach helps provide a very fast-acting switch 11. It should be appreciated that, preferably, each fiber 17, 19 has its own separately controlled "servo loop" so that all fibers 17, 19 can be quickly positioned simultaneous rather than in some sequence.

In another approach, the REDS 29 in the matrix 81 are pulsed sequentially. Since the sequence is predetermined and since the application of an electrical pulse to an RED 29 is coordinated with the detectors 31a, detection of radiation in a radiation guide 45, 45a indicates fiber position. Corrective adjustment follows. However, sequential pulsing of individual REDs 29 is more time-consuming and tends to delay switch operation.

Referring again to FIGURES 5A, 5B and 6, details regarding the extraction of "alignment light" from a radiation guide 45 are described below. With a fiber 17 of the type shown in FIGURE 5A, the plastic coating 51 is removed from the fiber 17 starting at a location about 10 cm. from the fiber end 57. At such location, the cladding 49 is etched to remove it. Light sensors (not shown) are glued to the now-exposed radiation guide 45 using high-refractive-index glue to cause RED-emitted radiation to impinge on such sensors which are connected to a detector 31a.

With a fiber 17 of the type shown in FIGURE 5B, the plastic coating 51 is similarly removed from the fiber 17 starting at a location about 10 cm. from the fiber end 57. At such location, light sensors (not shown) are glued to the now-exposed radiation guide 45 in the manner described above.

With an aligning fiber 53 as shown in FIGURE 6, such fiber 53 is cleaved (severed squarely) at a location about 10-20 cm. from the fiber end 57. The now-exposed core 47 is butt coupled to a light sensor or to the detector 31a as required.

While the principles of the invention have been shown and described in connection with only a few embodiments, it is to be clearly understood that such embodiments are exemplary and that other embodiments are possible without departing from the spirit of the invention.

## Claims

1. An optical fibre alignment apparatus (10) having first and second optically opposed fibres (17,19), first optical means (35, 35a), associated with the first fibre (17), for directing radiation towards the first fibre (17), means (25) associated with the first fibre (17) for generating an alignment signal, and a first servo control means (33) associated with the second fibre (19) for use in adjusting a direction of an emitted optical beam from the second fibre and including radiation receiving means (53) fixed to the second optical fibre (19), wherein the means for generating the alignment signal (25) comprises a first plurality of radiation emitting devices (29) hereinafter also referred to as REDs, disposed a first array (27) and mounted in known position relative to the first optical means (35, 35a) and the first servo control means (33) is adapted to separately detect radiation from each of the REDs to perform a comparison of the separately detected radiation from the REDs (29), and to adjust the direction of the emitted optical beam from the second fibre (19).

2. An apparatus as claimed in claim 1, wherein the first array (27) of REDs (29) has an array centre (39,39a) in a known position with respect to the first optical means (35, 35a) and wherein the servo control means (33) includes means adjusting the position of one of the fibres (17, 19) until radiation received from each RED (29) is substantially equal to that received from each other RED (29), the fibre thereby (17,19) being aligned with the first optical means (35,35a).

3. An apparatus as claimed in claim 2 wherein the REDs are pulsed for measurement of radiation received from each RED (29), wherein such pulsing is patterned to allow radiation emitted from each such RED (29) to be distinguished from the other REDS (29).

4. An apparatus as claimed in claim 1, further including:
a second plurality of REDs defining a second array (27a) of REDs mounted adjacent to said second fibre (19);
a radiation responsive means coupled to said first fibre(17) fro adjusting fibre position until radiation received from each RED (29) in an array (27, 27a) is substantially equal to that received from each other RED (29) in the array (27, 27a);
whereby the fibres (17, 19) are aligned with one another.

5. An apparatus as claimed in claim 4 wherein said radiation responsive means (33) includes a radiation guide (45) for receiving RED emitted radiation and the apparatus (10) includes a pair of panels (37, 37a) in optically opposed relationship and each panel includes:
a matrix of apertures (29);
a matrix of REDs (27) formed of plural RED arrays (27,27a), whereby the fibres (17, 19) are aligned with one another when radiation received in a radiation guide (45) from each RED in an array (27, 27a) substantially equal to that received from each other RED (29) in that array (27, 27a).

6. An apparatus as claimed in claim 4 further including a panel (37, 37a) having plural arrays of REDs (29) defining a matrix and wherein REDs in the matrix are pulsed sequentialy when adjusting fibre (17, 19) position.

7. An apparatus as claimed in claim 4 further including a panel (37, 37a) having plural arrays of REDs (29) defining a matrix and wherein REDs (29) in the matrix are driven continuously and at differing frequencies when adjusting fibre (17, 19) position.

8. An apparatus as claimed in claim 4 further including a panel (37, 37a) having columns and rows of REDS (29) defining an array matrix, wherein REDs (29) in each row are pulsed simultaneously, wherein REDs in each column are pulsed simultaneously and wherein,
in either order:
rows (83) of REDs (29) are pulsed sequentially; columns (85) of REDs (29) are pulsed sequentially, thereby reducing time required to align the fibres (17, 19).

9. An improved method for aligning an optical fibre core (47) with a target (35, 35a) including the steps of:
energising a plurality of REDs (29) defining an array (27, 27a), said REDs (29) being mounted in known position relative to the target;
separately detecting individual emitted radiation signals from each of said REDs (29), by means of receiving means fixed relative to the fibre core such that signals from the different REDs (29) can be discriminated from one another; and
performing a comparison of the radiation signals separately detected from each of the REDS (29) and adjusting a direction of an emitted optical beam from the optical fibre core (47) based on the comparison, thereby aligning the core (47) with the target).

10. A method as claimed in claim 9 wherein the REDs are energised by pulsing them.

## Patentansprüche

1. Vorrichtung zum Ausrichten optischer Fasern mit einer ersten und einer zweiten optisch gegenüberstehend angeordneten Faser (17,19), ersten optischen Mitteln (35,35a), die der ersten Faser (17) zugeordnet sind, um Strahlung zu der ersten Faser zu richten, Mitteln (25), die der ersten Faser (17) zugeordnet sind, um ein Ausrichtsignal zu erzeugen und erste Servosteuerungsmitteln (33), die der zweiten Faser (19) zugeordnet sind zum Gebrauch beim Einstellen der Richtung eines von der zweiten Faser emittierten optischen Strahls und Strahlungsaufnahmemittel (53) umfassen, die an der zweiten optischen Faser (19) befestigt sind, wobei die Mittel zur Erzeugung des Ausrichtsignals (25) eine erste Mehrzahl von Strahlungs-Emittiervorrichtungen (29) umfassen, nachfolgend als REDs bezeichnet, die in einer ersten Anordnung (27) angeordnet sind und in bekannter Position relativ zu den ersten optischen Mitteln (35, 35a) befestigt sind und wobei die ersten Servosteuerungsmittel (33) ausgebildet sind, Strahlung von jedem der REDs getrennt zu erfassen, einen Vergleich der getrennt erfaßten Strahlung der REDs (29) durchzuführen und die Richtung des von der zweiten Faser (19) emittierten optischen Strahls einzustellen.

2. Vorrichtung nach Anspruch 1,
wobei
die erste Anordnung (27) von REDs (29) ein Anordnungszentrum (39,39a) in einer bekannten Position in Bezug zu den ersten optischen Mitteln (35, 35a) aufweist und wobei die Servosteuerungsmittel (33) Mittel umfassen zum Einstellen der Position von einer der Fasern (17, 19) bis von jeder RED (29) empfangene Strahlung wesentlich gleich ist zu derjenigen, die von jeder anderen RED (29) empfangen wird, wodurch die Faser (17,19) mit den ersten optischen Mitteln (35,35a) ausgerichtet sind.

3. Vorrichtung nach Anspruch 2,
wobei
die REDs zum Messen der von jedem RED (29) empfangenen Strahlung gepulst sind, wobei dieses Pulsen gemäß einem Muster erfolgt, um eine Unterscheidung der von jedem RED (29) emittierten Strahlung gegenüber der von den anderen REDs (29) zu ermöglichen.

4. Vorrichtung nach Anspruch 1, weiter umfassend:
Eine zweite Mehrzahl an REDs, die eine zweite Anordnung (27a) von REDs bilden und die nahe der zweiten Faser (19) befestigt sind;
mit der ersten Faser (17) verbundene Strahlungsreaktionsmittel zum Ausrichten der Faserposition, bis die von jeder RED (29) in einer Anordnung (27, 27a) empfangene Strahlung wesentlich gleich ist zu derjenigen, die von jeder anderen RED (29) in der Anordnung (27, 27a) empfangen wird;
wodurch die Fasern (17, 19) aufeinander ausgerichtet sind.

5. Vorrichtung nach Anspruch 4,
wobei
die Strahlungsreaktionsmittel (33) einen Strahlungsleiter (45) zum Empfang der von den REDs (29) emittierten Strahlung umfassen und die Vorrichtung (10) ein Plattenpaar (37, 37a) in optisch einander gegenüberstehender Anordnung umfaßt und jede Platte aufweist:
Eine Matrix von Öffnungen (29);
Eine Matrix von REDs (27), die aus mehreren RED-Anordnungen (27, 27a) gebildet ist, wobei die Fasern (17, 19) eine zur anderen ausgerichtet sind, wenn in einem Strahlungsleiter (45) von jedem RED in einer Anordnung (27, 27a) empfangene Strahlung weentlich gleich ist zu der, die von jedem anderen RED (29) in dieser Anordnung (27, 27a) empfangen ist.

6. Vorrichtung nach Anspruch 4, weiter mit einer Platte (37, 37a), die mehrere Anordnungen von REDs (29) aufweist, die eine Matrix definieren, und wobei die REDs in der Matrix aufeinanderfolgend gepulst werden, wenn die Position der Fasern (17, 19) eingestellt wird.

7. Vorrichtung nach Anspruch 4, weiter mit einer Platte (37, 37a), die mehrere Anordnungen von REDs (29) aufweist, die eine Matrix definieren, und wobei die REDs in der Matrix kontinuierlich und mit unterschiedlichen Frequenzen angesteuert werden, wenn die Position der Fasern (17, 19) eingestellt wird.

8. Vorrichtung nach Anspruch 4, weiter mit einer Platte (37, 37a), die Spalten und Zeilen von REDs aufweist, die eine Anordnungsmatrix definieren, wobei die REDs (29) in jeder Zeile gleichzeitig gepulst werden, die REDs (29) in jeder Spalte gleichzeitig gepulst werden und wobei
in jeder Reihenfolge:
Die Zeilen (83) von REDs (29) aufeinanderfolgend gepulst werden;
Die Spalten (85) von REDs (29) aufeinanderfolgend gepulst werden, wodurch die nötige Zeit, um die Fasern (17, 19) auszurichten, reduziert wird.

9. Eine verbessertes Verfahren zum Ausrichten eines optischen Faserkerns (47) mit einem Ziel (35, 35a) umfassend die Schritte:
Erregen einer Mehrzahl von REDs (29), die eine Anordnung (27, 27a) definieren, wobei die REDs (29) in bekannter Position relativ zu dem Ziel befedstigt sind,
getrenntes Erfassen der von jedem der REDs (29) einzeln ausgesandten Strahlungssignals durch Aufnahmemittel, die relativ zu dem Faserkern so befestigt sind, daß Signale von den unterschiedlichen REDs (29) voneinander diskriminiert werden können, und
Durchführen eines Vergleiches der Strahlungssignale , die von jedem der REDs (29) getrennt erfasst wurden und Ausrichten der Richtung eines emittierten optischen Strahls aus dem optischen Faserkern (47) basierend auf dem Vergleich, wodurch der Kern (47) mit dem Ziel ausgerichtet wird.

10. Ein Verfahren nach Anspruch 9,
wobei
die REDs durch deren Pulsen erregt werden.

## Revendications

1. Appareil d'alignement de fibres optiques (10) comportant des première et deuxième fibres (17, 19) optiquement opposées, des premiers moyens optiques (35, 35a), associés à la première fibre (17), destinés à diriger un rayonnement vers la première fibre (17), des moyens (25) associés à la première fibre (17) pour produire un signal d'alignement, et une première servocommande (33) associée à la deuxième fibre (19) pour ajuster la direction d'un faisceau optique émis par la deuxième fibre, et comprenant des moyens récepteurs de rayonnements (53) fixés sur la deuxième fibre optique (19), les moyens destinés à produire le signal d'alignement (25) comprenant une première pluralité de dispositifs émetteurs de rayons (29), appelés ici DERs, disposés en un premier ensemble (27) et montés dans une position connue par rapport aux premiers moyens optiques (35, 35a), et la première servocommande (33) étant adaptée pour détecter séparément le rayonnement qui provient de chaque DER pour effectuer une comparaison des rayons détectés séparément, en provenance des DERs (29), et pour ajuster la direction du faisceau optique émis par la deuxième fibre (19).

2. Appareil selon la revendication 1, dans lequel le premier ensemble (27) de DERs (29) présente un centre d'ensemble (39, 39a) qui se trouve dans une position connue par rapport aux premiers moyens optiques (35, 35a) et dans lequel la servocommande (33) comprend des moyens qui ajustent la position de l'une des fibres (17, 19) jusqu'à ce que le rayon reçu de chaque DER (29) soit sensiblement égal à celui qui est reçu de chaque autre DER (29), la fibre (17, 19) étant ainsi alignée avec les premiers moyens optiques (35, 35a).

3. Appareil selon la revendication 2, dans lequel on envoie des impulsions aux DERs pour mesurer le rayon reçu de chaque DER (29), cet envoi d'impulsions étant structuré pour permettre aux rayons émis par chaque DER (29) d'être distingués des autres DERs (29).

4. Appareil selon la revendication 1, comprenant, en outre:
une deuxième pluralité de DERs définissant un deuxième ensemble (27a) de DERs monté de façon adjacente à la deuxième fibre (19) ;
des moyens réagissant aux rayons, couplés à la première fibre (17) pour ajuster la position de la fibre jusqu'à ce que le rayon reçu de chaque DER (29), dans un ensemble (27, 27a), soit sensiblement égal à celui qui est reçu de chaque autre DER (29) dans l'ensemble (27, 27a) ;
les fibres (17, 19) étant alignées les unes avec les autres.

5. Appareil selon la revendication 4, dans lequel les moyens réagissant aux rayons (33) comprennent un guide de rayons (45) destiné à recevoir les rayons émis par les DERs, et l'appareil (10) comprend une paire de panneaux (37, 37a) optiquement opposés l'un à l'autre, et chaque panneau comprend :
une matrice d'ouvertures (29) ;
une matrice de DERs (27) constituée de plusieurs ensembles de DERs (27, 27a), les fibres (17, 19) étant alignées les unes avec les autres lorsque le rayonnement reçu dans un guide de rayons (45), en provenance de chaque DER présent dans un ensemble (27, 27a) est sensiblement égal à celui qui est reçu en provenance de chaque autre DER (29) présent dans cet ensemble (27, 27a).

6. Appareil selon la revendication 4 comprenant, en outre, un panneau (37, 37a) comportant plusieurs ensembles de DERs (29) définissant une matrice, et les DERs présents dans la matrice recevant des impulsions séquentielles lorsque la position de la fibre (17, 19) est ajustée.

7. Appareil selon la revendication 4 comprenant, en outre, un panneau (37, 37a) comportant plusieurs ensembles de DERs (29) définissant une matrice, et les DERs (29) présents dans la matrice étant commandés en continu et à des fréquences différentes lorsque la position de la fibre (17, 19) est ajustée.

8. Appareil selon la revendication 4 comprenant, en outre, un panneau (37, 37a) possédant des colonnes et des lignes de DERs (29) définissant une matrice, les DERs (29) de chaque ligne recevant simultanément des impulsions, les DERs de chaque colonne recevant des impulsions simultanément, et
dans n'importe quel ordre :
les lignes (83) de DERs (29) recevant des impulsions séquentiellement ; les colonnes (85) de DERs (29) recevant des impulsions séquentiellement, ce qui réduit le temps nécessaire pour aligner les fibres (17, 19).

9. Procédé perfectionné d'alignement d'un coeur (47) de fibre optique avec une cible (35, 35a), comprenant les étapes qui consistent à :
activer une pluralité de DERs (29) définissant un ensemble (27, 27a), ces DERs (29) étant montés dans une position connue par rapport à la cible ;
détecter séparément les signaux de rayonnement émis individuellement par chaque DER (29), grâce à des moyens récepteurs montés, par rapport au coeur de la fibre, de telle sorte que les signaux provenant des différents DERs (29) puissent être distingués les uns des autres ; et
effectuer une comparaison des signaux de rayonnement détectés séparément, en provenance de chacun des DERs (29) et ajuster la direction d'un faisceau optique émis par le coeur (47) de la fibre optique, sur la base de la comparaison, alignant ainsi le coeur (47) avec la cible.

10. Procédé selon la revendication 9, dans lequel les DERs sont activés en leur envoyant des impulsions.
